# EUROPÄISCHE PATENTSCHRIFT

(11) **EP 2 379 232 B1**
(45) Veröffentlichungstag und Bekanntmachung des Hinweises auf die Patenterteilung: **02.09.2015**
(21) Anmeldenummer: 09801921.9
(22) Anmeldetag: 13.11.2009
(51) Int. Cl.: B05D 1/14, D06Q 1/14

(54) **FLOCKFOLIE, VERFAHREN ZU IHRER HERSTELLUNG UND IHRE VERWENDUNG**
FLOCKING FILM, METHOD FOR THE PRODUCTION THEREOF, AND USE THEREOF
FEUILLE DE FLOCAGE, SON PROCÉDÉ DE PRODUCTION ET SON UTILISATION

(30) Priorität: 17.01.2009 DE 102009005010
(43) Veröffentlichungstag der Anmeldung: 26.10.2011
(73) Patentinhaber: NTT New Textile Technologies GmbH, 72336 Balingen (DE)
(72) Erfinder: JORDAN, Manfred, 88161 Lindenberg (DE)
(74) Vertreter: Müller, Gottfried
(86) Internationale Anmeldenummer: PCT/DE2009/001624
(87) Internationale Veröffentlichungsnummer: WO 2010/081446

(56) Entgegenhaltungen:
- US-A- 4 201 810

## Beschreibung

Die Erfindung betrifft eine Flockfolie, mit der auf einfache Weise und unter geringer Staubentwicklung Beflockungsmaterialien vollflächig oder in definierten Bereichen auf Oberflächen von Textilien aufgebracht werden können. Die Flockfolie ist besonders zur Beflockung von nahtlosen Unter- und eng anliegenden Sportbekleidungsstücken geeignet, deren elastische und/oder stützende Eigenschaften durch elastomere Klebstoffe erreicht werden.

Bei herkömmlichen Unterbekleidungsstücken, wie z. B. Büstenhalter (BHs), Unterhosen und Unterhemden, sind die Randbereiche üblicherweise versäumt und die elastischen und stützenden Einlagen mit dem Textil vernäht.

Darüber hinaus sind auch Verfahren bekannt, mit denen insbesondere BHs und Unterhosen nahtlos hergestellt werden können, die ähnliche elastische und/oder stützende Eigenschaften haben, wie genähte Unterbekeidungsstücke.

US 4.201.810 offenbart: Eine Flockfolie, umfassen eine Trägerfolie sowie eine wasserlösliche Schicht, gebildet aus getrocknetem Verdickungsmittel, auf deren Oberfläche Flockfasern fest impliziert sind.

So sind aus EP 0 809 945 B1, EP 0 852 915 B1 und DE 37 88 166 T2 nahtlose Unterbekleidungsstücke bekannt, die durch Verkleben mit thermoplastischen Klebstoffen, wie z. B. Harzen, hergestellt werden. Thermoplastische Klebstoffe besitzen allerdings keine ausgeprägten elastischen Eigenschaften. Es ist deshalb in den Bereichen der Unterbekleidungsstücke, die elastisch sein müssen, erforderlich, Verstärkungsteile aufzukaschieren.

In DE 692 08 910 T2 wird ein dekoriertes Textil beschrieben, bei dem Beflockungsmaterial mittels eines thermoplastischen Klebers, wie z. B. Acrylatharz, Polyethylen, Polyurethan, Paraffin oder einem Gummiderivat auf das Textil aufgeschmolzen wird.

Mit dem dort beschriebenen Verfahren können zwar haltbare dekorative Schichten aus Beflockungsmaterial aufgebracht werden; Unterbekleidungsstücke mit den erforderlichen elastischen Eigenschaften können jedoch nicht hergestellt werden.

Das Patent DE 28 35 834 C3 beansprucht Schutz für ein übertragbares, geflocktes Fasermustermaterial für dekorativ beflockte Textilerzeugnisse, das mittels Hitze und Druck in einer einfachen Weise auf einen zu dekorierenden Gegenstand, wie z. b. Hemden und Sportbekleidung aufgebracht werden kann. Die Flockfasern sind mit einem Ende in einer wasserlöslichen, flexiblen Schicht fest impliziert und mit dem anderen Ende zusätzlich in eine thermoplastische und Druckempfindliche Kunstharzschicht eingebettet. Für die Beflockung von elastischen Textilien ist dieses Fasermustermaterial nicht geeignet.

Mit WO 02/07959 wurde eine Flockfolie offenbart, die Flockfasern mittels eines lösbar machenden Agenz (z. B. Wachs) an einer Trägerfront festhält. Wachs hat jedoch den Nachteil, dass es nicht mit Wasser entfernt werden kann.

In DE 199 42 996 B4 wird ein Verfahren zur Herstellung eines Unterbekleidungsstücks beschrieben, bei dem auf dem mindestens einlagigen textilen Trägermaterial bereichsweise ein elastomerer Klebstoff aufgetragen wird, der nachfolgend mittels Beflockungsmaterial beschichtet wird. Hierzu wird entweder loses Beflockungspulver aufgestreut oder dieses mit Hilfe einer elektrostatischen Spannung auf das Trägermaterial aufgebracht. Als Klebstoffe werden elastomeres Silikon, Polyurethan oder elastomerer Kautschuk vorgeschlagen.

Insbesondere das vorgeschlagene Silikon hat sehr gute elastische Eigenschaften, sodass, sofern das Silikon ausreichend dick aufgetragen wird, Unterbekleidungsstücke ohne Verstärkungsstücke mit guten elastischen Eigenschaften hergestellt werden können. Allerdings ist bei BHs und Unterhosen der Anteil des Textils, das mit Silikon und Beflockungsmaterial versehen werden muss, im Vergleich zum Anteil des Textils, das nicht behandelt werden muss, gering. Infolgedessen bleibt ein großer Teil des aufgebrachten Beflockungsmaterials nicht kleben, sondern muss wieder vom Textil entfernt werden. Durch dieses Aufbringen des Beflockungsmaterials "im Überschuss" wird eine sehr hohe Belastung der Luft mit Staub verursacht. Zudem wird entweder viel Beflockungsmaterial verbraucht, oder, falls das Beflockungsmaterial gesammelt und rückgeführt wird, ein hoher Arbeitsaufwand verursacht.

Der Erfindung liegt die Aufgabe zugrunde, die Nachteile des Standes der Technik zu beseitigen. Insbesondere soll ein Mittel gefunden werden, mit dem auf einfache Weise und unter geringer Staubentwicklung Beflockungsmaterialien vollflächig oder in definierten Bereichen auf mit frischem Kleber versehene textile Oberflächen aufgebracht werden können. Mit der Flockfolie sollen unkompliziert v. a. nahtlose Unterbekleidungsstücke herstellbar sein, deren elastische und/oder stützende Eigenschaften durch elastomere Klebstoffe erreicht werden.

Die Aufgabe der Erfindung wird durch die kennzeichnenden Merkmale der Ansprüche 1 und 5 gelöst. Weitere vorteilhafte Ausführungen und Verwendungen der Erfindung ergeben sich aus den Ansprüchen 2 bis 4 und 6 bis 15.

Erfindungsgemäß besteht die für das Aufbringen von Beflockungsmaterialien auf Textilien verwendete Flockfolie aus einer wasserlöslichen, flexiblen Schicht, gebildet aus getrocknetem Verdickungsmittel, auf deren Oberfläche Flockfasern oder Zellulosepartikel fest impliziert sind.

Es ist vorgesehen, dass die wasserlösliche flexible Schicht aus Alginat besteht und 0,25 bis 1 mm dick ist.

Als Beflockungsmaterial sind Flockfasern in Form von Naturfasern, synthetischen Fasern sowie halbsynthetischen Fasern oder pulverförmige Zellulosepartikel eingesetzt.

Zur Herstellung der Flockfolie wird zuerst eine Trägerfolie mit einem aushärtbaren wasserlöslichen Gel, wie z. B. Alginat, bestrichen. Die Trägerfolie besteht entweder aus einem antihaftenden Material (z. B. Teflon) oder sie ist zumindest auf der Seite, auf der das Gel aufgetragen wird, mit einer antihaftenden Imprägnierung versehen (wie z. B. beim Druckpapier).

Auf die aufgetragene Gelschicht wird das Beflockungsmaterial entweder mittels einer Streuvorrichtung oder elektrostatisch aufgebracht. Bei der elektrostatischen Beflockung wird das Beflockungsmaterial automatisch ausgerichtet; wodurch eine gleichmäßigere Verteilung und Ausrichtung der Partikel bzw. Fasern erreicht wird. Auch bei der Beflockung durch Bestreuen kann, muss jedoch nicht, vor dem Trocknen der Gelschicht eine elektrostatische Ausrichtung des Beflockungsmaterials vorgenommen werden.

Nach der Beflockung wird die Gelschicht, z. B. in einem Umluftofen, getrocknet, wodurch diese zu einer wasserlöslichen flexiblen Schicht erhärtet.

Schließlich wird die so erzeugte Flockfolie von der Trägerfolie abgezogen und aufgewickelt.

Zur Beschichtung der Textilien, wird die Flockfolie flächig oder entsprechend der zu beschichtenden Bereiche zugeschnitten und auf die mit elastomerem Kleber (z. B. Silikonkleber) versehene Oberfläche des Textils aufgelegt. Danach wird die Flockfolie mit dem Textil verpresst und schließlich die wasserlösliche Schicht der am Textil anhaftenden Flockfolie in einem Waschschritt herausgelöst.

Die Erfindung wird nachfolgend anhand eines Ausführungsbeispiels näher erläutert; hierzu zeigen:
- Fig. 1:: die Herstellung/den Aufbau (Schnitt) der Flockfolie einschließlich Trägerfolie;
- Fig. 2:: die Flockfolie (Schrägdraufsicht) mit Einzelheit A (Schnitt);
- Fig. 3a:: das Aufbringen einer zugeschnitten Flockfolie auf ein mit Silikonkleber versehenes Textil;
- Fig. 3b:: die mit dem Textil verpresste Flockfolie;
- Fig. 3c:: das Textil nach dem Auflösen der wasserlöslichen Schicht der Flockfolie.

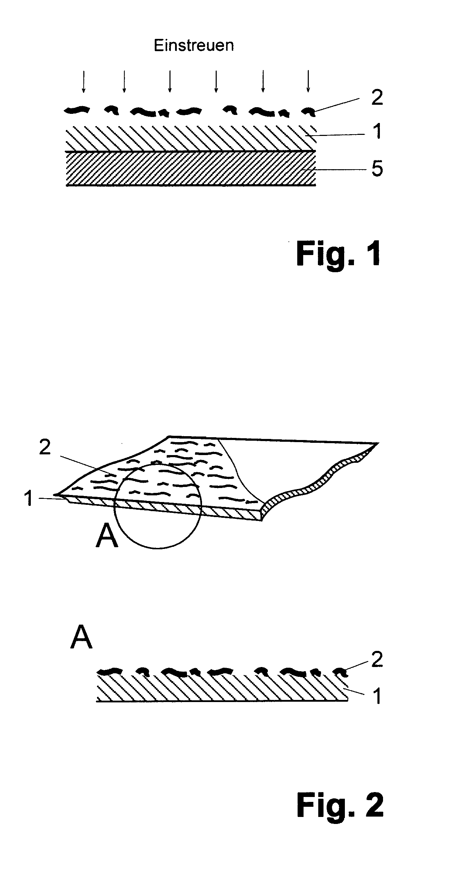

Zur Herstellung der Flockfolie (Fig. 1) wird mittels einer Rakel eine ca. 1 mm dicke Schicht aus gelartigem Alginat 1 auf das Druckpapier 5 aufgestrichen. Unmittelbar nach dem Strich werden mittels einer (nicht dargestellten) Streuvorrichtung Flockfasern 2 auf die Alginatschicht 1 aufgebracht. Die Streuvorrichtung ermöglicht es, definierte Mengen der Flockfasern 2 auf die Schicht 1 aufzustreuen. Die Flockfasern 2 kleben an der Oberfläche der frisch aufgetragenen Alginatschicht 1 fest, wodurch gewährleistet wird, dass während des Aufstreuens die Umgebungsluft nur mit sehr geringen Staubmengen belastet wird.

Um eine gleichmäßigere Verteilung und Ausrichtung der Fasern 2, die nach dem Aufstreuen statistisch verteilt sind, in der Flockfolie zu erreichen, werden die Fasern 2 mittels elektrostatischer Felder ausgerichtet.

Die Alginatschicht 1 wird in einem Umluftofen getrocknet und danach zusammen mit den eingebetteten Fasern 2 vom Druckpapier 5 abgezogen und zur Lagerung vor der weiteren Verwendung aufgerollt.

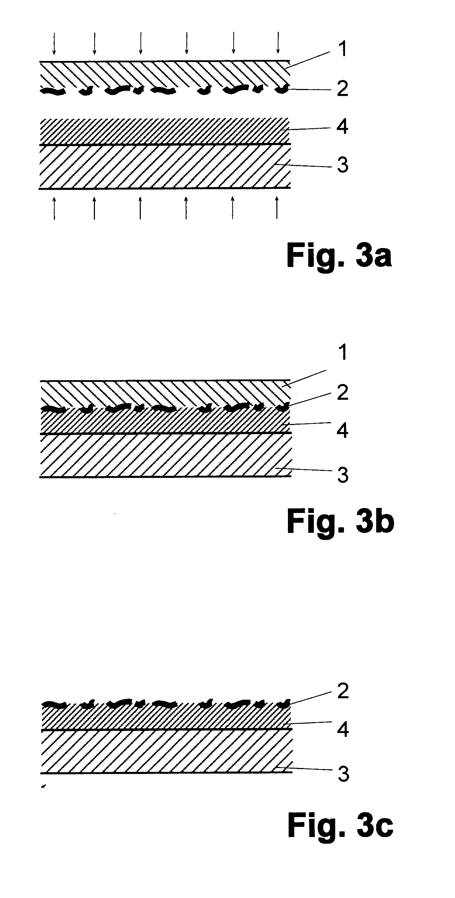

Bei der Verwendung der Flockfolie zur Beschichtung eines Unterbekleidungsstückes, bei dem die elastischen und/oder stützenden Eigenschaften dadurch erreicht werden, dass bereichsweise Schichten aus elastomerem Silikonkleber 4 auf das Textil 3 des Unterbekleidungsstücks aufgetragen werden, wird die Flockfolie entsprechend der Form des Silikonkleberauftrags von Hand oder mit Hilfe eines Legewagens zugeschnitten und nach dem Druck des Unterbekleidungsstückes auf die frische, d. h. noch klebrige silikonisierte Oberfläche des Unterbekleidungsstückes aufgelegt (Fig. 3a). Anschließend wird das Textil 3 mit der aufliegenden Flockfolie in eine Presse gelegt und bei ca. 160°C verpresst, wobei der Druck etwa 30 s aufrechterhalten wird. Durch das Verpressen werden die aus der Flockfolie hervorstehenden Fasern 2 im Silikonkleber 4 eingebettet und mit diesem verklebt (Fig. 3b).

Schließlich wird das Unterbekleidungsstück mit der nunmehr aufgepressten Flockfolie einem Waschvorgang unterzogen, bei dem sich die Alginatschicht 1 auflöst. Übrig bleibt ein Unterbekleidungsstück, bei dem die silikonisierten Bereiche mit Flockfasern 2 beschichtet sind (Fig. 3c). Durch den Pressvorgang ist sichergestellt, dass die Flockfasern 2 dauerhaft mit dem Silikonkleber 4 verbunden sind.

Die Verwendung der Flockfolie ermöglicht somit ein unkompliziertes Beflocken von nahtlosen, mit Silikonkleber hergestellten Unterbekleidungsstücken. Eine Belastung der Umgebungsluft durch Staub tritt praktisch nicht auf.

### Liste der verwendeten Bezugszeichen

- 1: Alginatschicht
- 2: Flockfaser/Zellulosepartikel
- 3: Textil
- 4: Silikonkleberschicht
- 5: Trägerfolie/Druckpapier

## Patentansprüche

1. Flockfolie, **dadurch gekennzeichnet, dass** diese aus einer wasserlöslichen, flexiblen Schicht (1), gebildet aus getrocknetem Verdickungsmittel, auf deren Oberfläche Flockfasern (2) oder Zellulosepartikel (2) fest impliziert sind, besteht.

2. Flockfolie nach Anspruch 1, **dadurch gekennzeichnet, dass** die Schicht (1) 0,25 bis 1 mm dick ist.

3. Flockfolie nach Anspruch 1 und 2, **dadurch gekennzeichnet, dass** die Flockfasern (2) Naturfasern, synthetische Fasern oder halbsynthetische Fasern sind.

4. Flockfolie nach Anspruch 1 und 2, **dadurch gekennzeichnet, dass** die Zellulosepartikel (2) pulverförmig sind.

5. Verfahren zur Herstellung der Flockfolie nach Anspruch 1, **dadurch gekennzeichnet, dass** es die Schritte
- Bestreichen einer antihaftenden Trägerfolie (5) mit einem aushärtbaren wasserlöslichen Gel,
- Aufbringen von Flockfasern (2) oder von Zellulosepartikeln (2) auf die Gelschicht (1),
- Trocknen des Gels zu der wasserlöslichen flexiblen Schicht (1),
- Abziehen der durch das ausgehärtete Gel gebildeten Schicht (1) von der Trägerfolie (5),
- Aufwickeln der Flockfolie,
umfasst.

6. Verfahren nach Anspruch 5, **dadurch gekennzeichnet, dass** als Trägerfolie (5) ein Druckpapier verwendet wird.

7. Verfahren nach Anspruch 5, **dadurch gekennzeichnet, dass** als Trägerfolie (5) eine Teflonfolie verwendet wird.

8. Verfahren nach Anspruch 5 bis 7, **dadurch gekennzeichnet, dass** das Gel 1 mm dick auf die Trägerfolie (5) aufgetragen wird.

9. Verfahren nach Anspruch 5 bis 8, **dadurch gekennzeichnet, dass** als Gel ein Verdickungsmittel eingesetzt wird.

10. Verfahren nach Anspruch 9, **dadurch gekennzeichnet, dass** als Verdickungsmittel Alginat eingesetzt wird.

11. Verfahren nach Anspruch 5 bis 10, **dadurch gekennzeichnet, dass** die Flockfasern (2) und/oder Zellulosepartikel (2) mittels einer Streuvorrichtung auf die Gelschicht (1) aufgebracht werden.

12. Verfahren nach Anspruch 11, **dadurch gekennzeichnet, dass** die Flockfasern (2) und/oder Zellulosepartikel (2) vor dem Trocknen des Gels mittels elektrostatischer Felder ausgerichtet werden.

13. Verfahren nach Anspruch 5 bis 10, **dadurch gekennzeichnet, dass** die Gelschicht (1) elektrostatisch mit den Flockfasern (2) und/oder Zellulosepartikeln (2) beflockt wird.

14. Verwendung der Flockfolie nach Anspruch 1 zur Beschichtung von Bekleidungsstücken, typischerweise von Unterbekleidungsstücken, deren elastische und/oder stützende Eigenschaften mittels elastomerer Klebstoffe erreicht werden.

15. Verwendung der Flockfolie nach Anspruch 1 zur Beschichtung von Bekleidungsstücken, typischerweise von Unterbekleidungsstücken, wobei die Flockfolie flächig oder entsprechend der zu beschichtenden Bereiche des Unterbekleidungsstücks zugeschnitten, auf eine mit Silikonkleber versehene Oberfläche des Textils (3) des Unterbekleidungsstücks aufgelegt, die Flockfolie mit dem Textil (3) mittels einer Presse ca. 30 Sekunden bei ca. 160°C verpresst und die wasserlösliche Schicht (1) der am Textil (3) anhaftenden Flockfolie in einem Waschschritt herausgelöst wird.

## Claims

1. Flocked transfer, **characterized in that** it consists of a water-soluble flexible layer (1) formed from a dried thickener and the surface of which holds flock fibres (2) or cellulose particles (2) firmly in place.

2. Flocked transfer according to Claim 1, **characterized in that** the layer (1) is from 0.25 to 1 mm in thickness.

3. Flocked transfer according to Claim 1 and 2, **characterized in that** the flock fibres (2) are natural fibres, synthetic fibres or semi-synthetic fibres.

4. Flocked transfer according to Claim 1 and 2, **characterized in that** the cellulose particles (2) are pulverulent.

5. Process for producing the flocked transfer according to Claim 1, **characterized in that** it comprises the steps of
- coating an anti-adherent transfer sheet (5) with a hardenable water-soluble gel,
- applying flock fibres (2) or cellulose particles (2) to the gel layer (1),
- drying the gel to form the water-soluble flexible layer (1),
- peeling the layer (1) formed by the hardened gel off the transfer sheet (5),
- winding up the flocked transfer.

6. Process according to Claim 5, **characterized in that** a sheet of printing paper is used as transfer sheet (5).

7. Process according to Claim 5, **characterized in that** a Teflon sheet is used as transfer sheet (5).

8. Process according to Claim 5 to 7, **characterized in that** the gel is applied to the transfer sheet (5) in a thickness of 1 mm.

9. Process according to Claim 5 to 8, **characterized in that** the gel used is a thickener.

10. Process according to Claim 9, **characterized in that** the thickener used is alginate.

11. Process according to Claim 5 to 10, **characterized in that** the flock fibres (2) and/or cellulose particles (2) are applied to the gel layer (1) by scattering means.

12. Process according to Claim 11, **characterized in that** electrostatic fields are used to align the flock fibres (2) and/or cellulose particles (2) before the gel is dried.

13. Process according to Claim 5 to 10, **characterized in that** the gel layer (1) is flocked with the flock fibres (2) and/or cellulose particles (2) by electrostatic means.

14. Use of the flocked transfer according to Claim 1 for coating garments, typically undergarments, the elastic and/or supporting properties of which are attained using elastomeric adhesives.

15. Use of the flocked transfer according to Claim 1 for coating garments, typically undergarments, wherein the flocked transfer is cut to size areally or to match the to-be-coated regions of the undergarment and laid on the silicone adhesive on the surface of the textile (3) of the undergarment, the flocked transfer is pressed against the textile (3) for about 30 seconds at about 160°C by means of a press, and the water-soluble layer (1) of the flocked transfer adhering to the textile (3) is dissolved away in a washing step.

## Revendications

1. Feuille de flocage, **caractérisée en ce que** celle-ci est constituée d'une couche flexible soluble dans l'eau (1), formée par un épaississant séché, sur la surface duquel des fibres de flocage (2) ou des particules de cellulose (2) sont fixées.

2. Feuille de flocage selon la revendication 1, **caractérisée en ce que** la couche (1) est d'une épaisseur de 0,25 à 1 mm.

3. Feuille de flocage selon les revendications 1 et 2, **caractérisée en ce que** les fibres de flocage (2) sont des fibres naturelles, des fibres synthétiques ou des fibres semi-synthétiques.

4. Feuille de flocage selon les revendications 1 et 2, **caractérisée en ce que** les particules de cellulose (2) sont sous forme de poudre.

5. Procédé de fabrication de la feuille de flocage selon la revendication 1, **caractérisé en ce qu'**il comprend les étapes suivantes :
- l'enduction d'une feuille support anti-adhérente (5) avec un gel durcissable soluble dans l'eau,
- l'application de fibres de flocage (2) ou de particules de cellulose (2) sur la couche de gel (1),
- le séchage du gel pour former la couche flexible soluble dans l'eau (1),
- le retrait de la couche formée par le gel durci (1) de la feuille support (5),
- l'enroulement de la feuille de flocage.

6. Procédé selon la revendication 5, **caractérisé en ce qu'**un papier d'impression est utilisé en tant que feuille support (5).

7. Procédé selon la revendication 5, **caractérisé en ce qu'**une feuille de Téflon est utilisée en tant que feuille support (5).

8. Procédé selon les revendications 5 à 7, **caractérisé en ce que** le gel est appliqué en une épaisseur de 1 mm sur la feuille support (5).

9. Procédé selon les revendications 5 à 8, **caractérisé en ce qu'**un épaississant est utilisé en tant que gel.

10. Procédé selon la revendication 9, **caractérisé en ce qu'**un alginate est utilisé en tant qu'épaississant.

11. Procédé selon les revendications 5 à 10, **caractérisé en ce que** les fibres de flocage (2) et/ou les particules de cellulose (2) sont appliquées sur la couche de gel (1) au moyen d'un dispositif de distribution.

12. Procédé selon la revendication 11, **caractérisé en ce que** les fibres de flocage (2) et/ou les particules de cellulose (2) sont orientées avant le séchage du gel au moyen d'un champ électrostatique.

13. Procédé selon les revendications 5 à 10, **caractérisé en ce que** la couche de gel (1) est floquée électrostatiquement avec les fibres de flocage (2) et/ou les particules de cellulose (2).

14. Utilisation de la feuille de flocage selon la revendication 1 pour le revêtement de vêtements, généralement de sous-vêtements, dont les propriétés élastiques et/ou de support sont obtenues au moyen d'adhésifs élastomères.

15. Utilisation de la feuille de flocage selon la revendication 1 pour le revêtement de vêtements, généralement de sous-vêtements, selon laquelle la feuille de flocage est découpée sur une grande étendue ou selon les zones à revêtir du sous-vêtement, disposée sur une surface du textile (3) du sous-vêtement munie d'un adhésif de silicone, la feuille de flocage est comprimée avec le textile (3) au moyen d'une presse pendant environ 30 secondes à environ 160 °C, et la couche soluble dans l'eau (1) est détachée de la feuille de flocage adhérant au textile (3) lors d'une étape de lavage.
